# FASCICULE DE BREVET EUROPEEN

(11) **EP 3 618 157 B1**
(45) Date de publication et mention de la délivrance du brevet: **21.07.2021**
(21) Numéro de dépôt: 19194926.2
(22) Date de dépôt: 02.09.2019
(51) Int. Cl.: H01M 8/026, H01M 8/0263, H01M 8/0273, H01M 8/18, H01M 8/2455, H01M 8/0206, H01M 8/0213

(54) **EMPILEMENT DE CELLULES ÉLECTROCHIMIQUES RÉDOX EN FLUX À SHUNT RÉDUIT**
STAPEL VON REDOX-FLOW ELEKTROCHEMISCHEN ZELLEN MIT REDUZIERTEM SHUNT
STACK OF REDOX-FLOW ELECTROCHEMICAL CELLS WITH DECREASED SHUNT

(30) Priorité: 03.09.2018 FR 1857898
(43) Date de publication de la demande: 04.03.2020
(73) Titulaire: Kemiwatt, 35708 Rennes (FR)
(72) Inventeur: BEILLE, Florent, 35700 Rennes (FR)
(74) Mandataire: Lavoix

(56) Documents cités:
- EP-A1- 2 980 903
- FR-A1- 3 059 469
- KR-A- 20150 088 034

## Description

### Domaine de l'invention

La présente invention concerne le domaine des cellules électrochimiques comprenant des électrodes séparées d'une membrane, notamment des cellules électrochimiques rédox en flux. La présente invention concerne en particulier un empilement de cellules électrochimiques. L'invention concerne également une batterie rédox en flux, ainsi qu'une méthode de production de courant.

### Art antérieur

Dans le domaine de l'invention, un empilement, ou plus communément pour l'homme du métier un « stack » (en anglais), désigne un empilement de cellules électrochimiques comprenant typiquement l'empilement d'au moins deux électrodes de cellule électrochimique en général maintenues en compression l'une avec l'autre, et séparées entre elles par une membrane perméable d'échange d'ions, de cadres assurant le logement des électrodes et l'étanchéité, l'alimentation et la répartition en fluides électrochimiques dans la cellule électrochimique. Le stack comprend également deux plaques collectrices assurant l'alimentation et la collecte du courant électrique.

Les cadres de l'empilement doivent assurer l'étanchéité de l'ensemble. Cette étanchéité est classiquement réalisée par des joints logés dans des logements des cadres dédiés à cet effet. Les cadres assurent également l'alimentation fluidique des cellules à l'aide de canaux. Cette alimentation en flux électrochimique doit être la plus homogène possible afin de d'assurer une homogénéité planaire de fonctionnement la plus importante possible.

En général, les cellules électrochimiques comprenant une membrane d'échange d'ions sont séparées de manière étanche en deux zones, l'une constituant un compartiment d'anode et l'autre un compartiment de cathode, séparées par la membrane d'échange d'ions. L'étanchéité interne de la cellule électrochimique est un enjeu essentiel pour le bon fonctionnement de la cellule.

Un stack présente en général un écoulement de fluides électrochimiques en parallèle et un empilement électrique de cellules électrochimiques en série. Pour les cellules connectées en série, un phénomène de courant de shunt peut apparaître entre les cellules du fait de la présence d'électrolytes fortement conducteurs dans les fluides électrochimiques. Ainsi, le courant circulera le long des courants fluidiques plutôt qu'à travers les cellules électrochimiques, provoquant une perte d'efficacité.

De plus, des électrolytes sont susceptibles d'entrer en contact et d'entrainer la corrosion des composants du stack, notamment des plaques graphite disposées entre les différentes électrodes du stack.

Pour éviter la corrosion des plaques graphite, la demande FR 3059469 de Kemwatt propose d'isoler électriquement les zones conductrices en contact avec les électrolytes et se trouvant en dehors de la surface active, notamment par l'ajout d'un film isolant ou d'un revêtement non conducteur sur les plaques.

Toutefois, cela ajoute un surcoût lors de la production de la cellule. De plus, les cellules électrochimiques sont susceptibles de fonctionner sur des durées très importantes, une batterie pouvant avoir plus de 10 000 cycles de charge/décharges sur une vingtaine d'années. Des électrolytes sont susceptibles de migrer entre le film isolant et la plaque graphite, suite à une dégradation de l'adhésif ou à l'usure du film, et de corroder les plaques en graphite, conduisant à des fuites des fluides électrochimiques et à de possibles mélanges des électrolytes. De plus, la présence d'un défaut sur le film ou son mauvais positionnement engendre un risque de corrosion très important.

La demande FR 3059469 de Kemwatt propose également de protéger les plaques graphite de la corrosion en les noyant dans les cadres plastique. Pour cela, des lamages sont réalisés dans les cadres plastique de distribution et les plaques graphite sont disposées à l'intérieur de ces lamages pour limiter les zones potentiellement en contact avec les électrolytes. Cependant, ces lamages présentent une très faible épaisseur, typiquement de l'ordre de quelques centièmes de micromètres à plusieurs millimètres, et sont donc complexes à réaliser. Cela nécessite notamment des précisions d'usinage élevées, susceptibles d'entrainer des surcoûts importants. De plus, le risque de fuites est important dans le cas du non-respect des tolérances. Il est en effet difficile d'avoir, pour les matériaux plastiques, des tolérances faibles, typiquement inférieures à environ 100 microns, du fait de la dilatation du plastique à la chaleur lors de l'usinage. Or, étant donné la finesse des cellules des stacks, les joints des cellules font de 1 à quelques millimètres d'épaisseur seulement, ce qui représente des compressions de quelques centaines de microns. Les défauts d'usinage du lamage peuvent se cumuler avec l'usinage des gorges de joints et conduire à des difficultés pour étancher les cellules.

### Objectifs de l'invention

La présente invention a pour but de fournir une cellule électrochimique permettant de réduire les courants de shunt, en particulier dans des cellules électrochimiques montées fluidiquement en parallèle.

La présente invention a pour but de fournir une cellule électrochimique assurant une bonne étanchéité, en particulier au niveau de la membrane d'échange d'ions. Cette étanchéité est en effet cruciale pour le fonctionnement d'une batterie électrochimique car une fuite interne provoquerait un mélange des électrolytes et une perte rapide et irréversible de sa capacité. La présente invention a pour but d'éviter ces inconvénients.

La présente invention a également pour but de fournir une cellule électrochimique simple à monter et/ou à démonter, et présentant une bonne durée de vie.

La présente invention a également pour but de limiter les coûts de production d'un empilement ou stack de cellules électrochimiques, en particulier dans le domaine des cellules électrochimiques rédox en flux.

La complexité de ces problèmes techniques est en particulier liée au fait d'être capable de les résoudre tous ensemble, ce que se propose de résoudre la présente invention.

La présente invention a pour but de résoudre l'ensemble ces problèmes techniques de manière fiable, industrielle et à faible coût.

### Description de l'invention

Pour résoudre les problèmes techniques, l'invention concerne un empilement de plusieurs cellules électrochimiques selon la revendication 1.

L'empilement selon l'invention peut comprendre l'une ou plusieurs des caractéristiques des revendications 2 à 8, prise(s) isolément ou suivant toute combinaison techniquement possible.

L'invention concerne également une batterie rédox en flux selon la revendication 9.

L'invention concerne encore une méthode de production d'électricité selon la revendication 10.

L'invention sera mieux comprise à la lecture de la description qui va suivre, donnée uniquement à titre d'exemple, et faite en se référant aux dessins annexés sur lesquels :
- la figure 1 représente un schéma d'une coupe longitudinale d'un empilement selon un mode de réalisation de la présente invention ;
- la figure 2 représente un schéma d'une coupe longitudinale de l'empilement selon un mode de réalisation de l'invention, au niveau d'un canal d'alimentation et d'un canal d'évacuation de la première électrode ;
- la figure 3 représente un schéma d'une coupe longitudinale de l'empilement selon un mode de réalisation de l'invention, au niveau d'un canal d'alimentation et d'un canal d'évacuation de la deuxième électrode ;
- la figure 4 représente un schéma d'une vue de dessus d'un cadre du côté de la partie distale du cadre selon un mode de réalisation particulier de l'invention;
- la figure 5 représente un schéma d'une vue de dessous d'un cadre du côté de la partie proximale du cadre, selon un mode de réalisation particulier de l'invention;
- la figure 6 représente un schéma d'une partie de la figure 1 agrandie au niveau du canal d'alimentation;
- la figure 7 représente un schéma d'une coupe longitudinale d'un empilement selon l'art antérieur.

Dans la présente invention il est fait référence indépendamment aux différents éléments par leur numéro de référence sur les figures, sans aucune limitation de la portée de l'invention. Les références à un élément avec plusieurs numéros de référence signifient que la description s'applique généralement à l'élément portant le signe auquel il est fait référence. Ainsi par exemple une référence à l'électrode 20, 30 signifie que la description s'applique généralement et indépendamment à l'électrode 20 et à l'électrode 30.

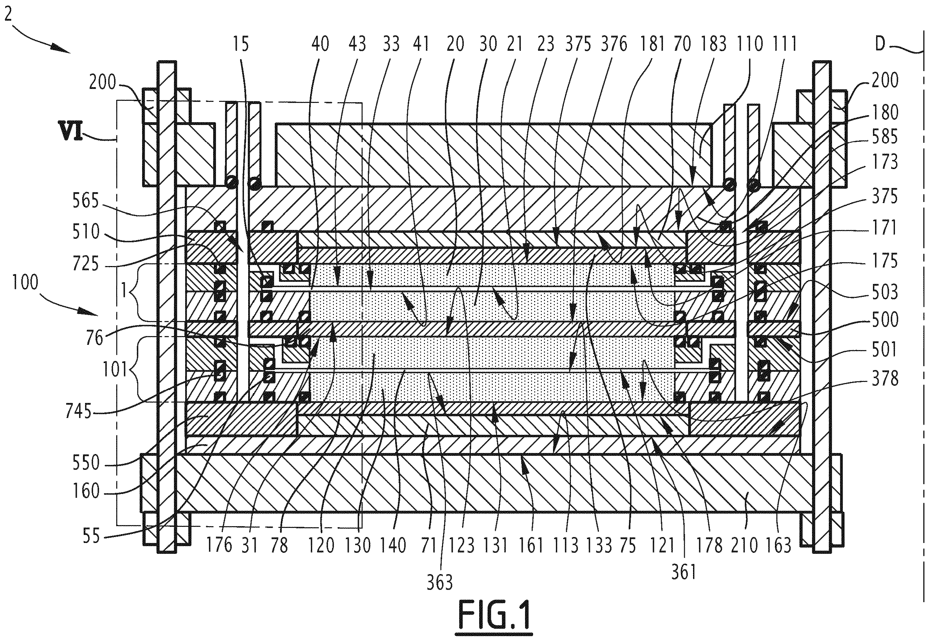

Un empilement 100 de plusieurs cellules électrochimiques 1, 101 selon l'invention est représenté schématiquement sur la figure 1.

L'empilement 100 comporte une première cellule électrochimique 1, une deuxième cellule électrochimique 101, une plaque intercalaire 76 et un cadre intercalaire 500.

De préférence, l'empilement 100 comporte une multitude de premières cellules électrochimiques 1, deuxièmes cellules électrochimiques 101, plaques intercalaires 76 et cadres intercalaires 500.

Les cellules électrochimiques 1, 101 sont empilées les unes sur les autres selon une direction d'empilement D. L'empilement 100 présente un axe central A parallèle à la direction d'empilement D et traversant les cellules électrochimiques 1, 101 sensiblement en leur centre.

L'empilement 100 comporte de préférence entre deux et cent cellules électrochimiques 1, 101, de préférence entre quarante et soixante cellules électrochimiques 1, 101. Sur la figure 1, à titre purement illustratif, l'empilement 100 comporte deux cellules électrochimiques 1, 101.

### Cellule électrochimique

### Cadres

Chaque cellule électrochimique 1, 101 comprend un cadre supérieur 10 logeant une première électrode 20 et un cadre inférieur 50 logeant une deuxième électrode 30. La première électrode 20 et la deuxième électrode 30 sont séparées par une membrane 40, comme cela sera décrit par la suite.

Selon un mode de réalisation, le cadre supérieur 10 et le cadre inférieur 50 sont symétriques et interchangeables. Ainsi un même et unique cadre peut former à la fois le cadre supérieur 10 et le cadre inférieur 50 par simple retournement.

En général, les cadres 10, 50 sont en polymère thermoplastique, comme par exemple en en Polypropylène (communément désigné par l'acronyme PP). Un cadre est généralement moulé ou usiné et peut être aussi imprimé, par exemple par impression tridimensionnelle.

Au moins un des cadres 10, 50 est de préférence réalisé dans un matériau comprenant des pigments. De préférence, au moins un des cadres 10, 50 est réalisé dans un matériau de couleur noir.

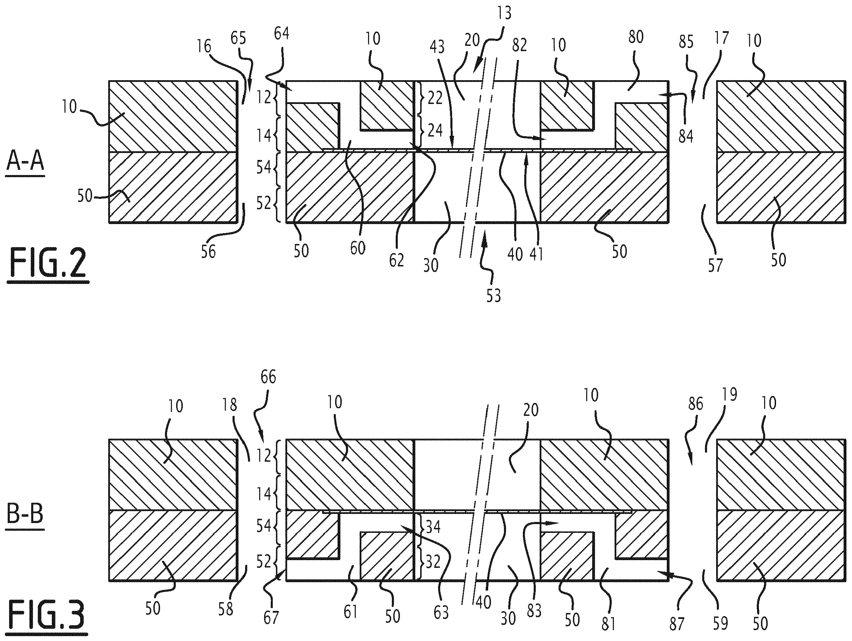

Sur les figures 2 et 3, chaque cadre 10, 50 comprend plusieurs canaux alimentation 65, 66 et d'évacuation 85, 86 de fluides électrochimiques. Ces canaux sont connus de l'art antérieur et servent par exemple à alimenter en différents fluides électrochimiques les électrodes d'une cellule électrochimique 1, 101.

Le premier canal d'alimentation 65 est destiné à alimenter en un premier fluide électrochimique la première électrode 20. Le premier canal d'évacuation 85 est destiné à évacuer le premier fluide électrochimique de la première électrode 20. Le premier canal d'évacuation 85 est en général disposé de manière opposée au premier canal d'alimentation 65 par rapport à l'axe central A de l'empilement 100, c'est-à-dire qu'il est sensiblement le symétrique du premier canal d'alimentation 65 par rotation d'un angle de 180° autour de l'axe central A.

Le deuxième canal d'alimentation 66 est destiné à alimenter en un deuxième fluide électrochimique la deuxième électrode 30. Le deuxième canal d'évacuation 86 est destiné à évacuer le deuxième fluide électrochimique de la deuxième électrode 30. Le deuxième canal d'évacuation 86 est en général disposé de manière opposée au deuxième canal d'alimentation 66 par rapport à l'axe central A de l'empilement 100, c'est-à-dire qu'il est sensiblement le symétrique du deuxième canal d'alimentation 66 par rotation d'un angle de 180° autour de l'axe central A.

Le cadre supérieur 10 comprend en général au moins un premier trou traversant 16, un deuxième trou traversant 17, un troisième trou traversant 18 et un quatrième trou traversant 19.

Le cadre inférieur 50 comprend en général au moins un premier trou traversant 56, un deuxième trou traversant 57, un troisième trou traversant 58 et un quatrième trou traversant 59.

Chaque premier trou traversant 16, 56 est de préférence transversal, perpendiculaire à la plus grande dimension du cadre 10, 50 respectif, et forme partie du premier canal d'alimentation 65 du premier fluide électrochimique.

Chaque deuxième trou traversant 17, 57 est de préférence transversal, perpendiculaire à la plus grande dimension du cadre 10, 50 respectif, et forme partie du premier canal d'évacuation 85 du premier fluide électrochimique.

Chaque troisième trou traversant 18, 58 est de préférence transversal, perpendiculaire à la plus grande dimension du cadre 10, 50 respectif, et forme partie du deuxième canal d'alimentation 66 du deuxième fluide électrochimique.

Chaque quatrième trou traversant 19, 59 est de préférence transversal, perpendiculaire à la plus grande dimension du cadre 10, 50 respectif, et forme partie du deuxième canal d'évacuation 86 du deuxième fluide électrochimique

Selon l'invention, le cadre supérieur 10 comprend une partie distale 12 de la membrane 40 et une partie proximale 14 de la membrane 40.

Le cadre supérieur 10 comprend un canal d'entrée 60 du premier fluide alimentant une face latérale de la première électrode 20, le canal d'entrée 60 comprenant un orifice de sortie 62 dans la partie proximale 14 du cadre supérieur 10 débouchant sur une face latérale de la première électrode 20. Le canal d'entrée 60 du premier fluide est typiquement en communication fluide avec le canal d'alimentation 65 pour permettre l'alimentation en premier fluide électrochimique de la première électrode 20.

Le cadre supérieur 10 comprend également un canal de sortie 80 du premier fluide par une face latérale de la première électrode 20, le canal de sortie 80 comprenant un orifice d'entrée 82 dans la partie proximale 14 débouchant sur une face latérale de la première électrode 20. Le canal de sortie 80 du premier fluide est typiquement en communication fluidique avec le canal d'évacuation 85 pour permettre l'évacuation du premier fluide électrochimique de la première électrode 20.

Le cadre inférieur 50 comprend une partie distale 52 de la membrane 40 et une partie proximale 54 de la membrane 40.

Le cadre inférieur 50 comprend un canal d'entrée 61 du deuxième fluide alimentant une face latérale de la deuxième électrode 30, le canal d'entrée 61 comprenant un orifice de sortie 63 dans la partie proximale 54 du cadre inférieur 50 débouchant sur une face latérale de la deuxième électrode 30. Le canal d'entrée 61 du deuxième fluide est typiquement en communication fluide avec le deuxième canal d'alimentation 66 pour permettre l'alimentation en deuxième fluide électrochimique de la deuxième électrode 30.

Le cadre inférieur 50 comprend un canal de sortie 81 du deuxième fluide par une face latérale de la deuxième électrode 30, le canal de sortie 81 comprenant un orifice d'entrée 83 dans la partie proximale 54 débouchant sur une face latérale de la deuxième électrode 30. Le canal de sortie 81 du deuxième fluide est typiquement en communication fluide avec le deuxième canal d'évacuation 86 pour permettre l'évacuation du deuxième fluide électrochimique de la deuxième électrode 30.

Au moins un, et de préférence l'ensemble, parmi le canal d'entrée 60 et le canal de sortie 80 du cadre supérieur 10 et le canal d'entrée 61 et le canal de sortie 81 du cadre inférieur 50, comprend un orifice d'entrée 64, 67, respectivement de sortie 84, 87, débouchant sur le canal d'alimentation 65, 66, respectivement d'évacuation 85, 86, dans la partie distale 12, 52 du cadre 10, 50. Avantageusement, l'orifice 64, 67 dans la partie distale 12, 52 débouche sur le canal d'alimentation 65, 66, constituant un orifice d'entrée d'alimentation du fluide du canal 60, 61, et l'orifice 84, 87 dans la partie distale 12, 52 débouche sur le canal d'évacuation 85, 86, constituant un orifice de sortie d'évacuation du fluide du canal 80, 81.

Avantageusement, les canaux d'entrée 60, 61 et de sortie 80, 81 ont une longueur assurant une résistance électrique suffisante pour limiter les courants de shunt. Les canaux d'entrée 60, 61 et de sortie 80, 81 ne doivent pas être trop longs pour que la perte de charge ne soit pas trop importante. L'homme du métier cherche donc un compromis à cet égard. A titre d'exemple, les canaux d'entrée 60, 61 et de sortie 80, 81 ont une longueur de l'ordre de 1 à 500 millimètres.

Selon un mode de réalisation, le cadre supérieur 10 et le cadre inférieur 50 sont maintenus solidairement en contact.

Selon une variante particulière, le cadre supérieur 10 et le cadre inférieur 50 sont maintenus solidairement en contact par collage ou soudage. Par exemple on peut thermosceller la face inférieure du cadre supérieur 10 avec la face supérieure du cadre inférieur 50. Pour thermosceller les cadres 10, 50, on peut utiliser un film polymère (par exemple poly(téréphtalate d'éthylène) (PET), poly(naphtalate d'éthylène) (PEN), Mylar®...). Un thermoscellage permet avantageusement de refermer le canal de shunt lorsqu'il débouche dans la partie proximale sur un cadre opposé et ainsi ajouter une résistance électrique supplémentaire au canal de shunt.

Par « cadre opposé » on entend le cadre inférieur 50 en référence au cadre supérieur 10 et le cadre supérieur 10 en référence au cadre inférieur 50.

Les cadres 10, 50 comportent plusieurs logements dans lesquels sont disposés des joints. L'agencement des joints sera décrit plus amplement par la suite

### Electrodes

Typiquement, l'électrode 20, 30 est une électrode poreuse. Une telle électrode est destinée à recevoir un fluide électrochimique dans sa porosité.

Selon une variante, l'électrode 20, 30 poreuse est une électrode poreuse de carbone, typiquement constituée d'un feutre de carbone au feutre de graphite. On connait de telles électrodes dans le domaine des cellules électrochimiques rédox en flux. Typiquement une telle électrode d'un feutre de graphite présente une épaisseur de 3 mm à 12 mm lorsqu'elle n'est pas comprimée et de 2 mm à 6 mm lorsqu'elle est comprimée, assurant ainsi un bon contact électrique avec une plaque collectrice de courant.

Avantageusement, la première électrode 20 est destinée à recevoir un premier fluide électrochimique et la deuxième électrode 30 est destinée à recevoir un deuxième fluide électrochimique. Le premier et le deuxième fluide électrochimique peuvent être identiques ou différents.

Selon une variante, la première électrode 20 et la deuxième électrode 30 présentent une épaisseur sensiblement identique ou similaire.

Selon une variante, la première électrode 20 présente une largeur et/ou une longueur sensiblement identiques ou similaires à la largeur et/ou la longueur, respectivement, de la deuxième électrode 30.

Selon une variante, la première électrode 20 présente une surface sensiblement identique ou similaire à la surface de la deuxième électrode 30.

Typiquement, la première électrode 20 est en contact avec le cadre supérieur 10 par ces bords extérieurs, de manière à être positionnée bord à bord dans le logement 13 du cadre supérieur 10.

Avantageusement, la première électrode 20 est en contact avec l'orifice 62 de sortie du canal 60 d'alimentation et l'orifice 82 d'entrée du canal 80 d'évacuation.

Typiquement, la deuxième électrode 30 est en contact avec le cadre inférieur 50 par ces bords extérieurs, de manière à être positionnée bord à bord dans le logement 53 du cadre inférieur 50.

Avantageusement, la deuxième électrode 30 est en contact avec l'orifice 63 de sortie du canal 61 d'alimentation et l'orifice 83 d'entrée du canal 81 d'évacuation

Plus précisément, l'orifice 62, 63 dans la partie proximale 14, 54 du cadre 10, 50 débouche sur une partie proximale 24, 34 de la face latérale de l'électrode 20, 30 et constitue un orifice de sortie d'alimentation du fluide du canal 60, 61. L'orifice 82, 83 dans la partie proximale 14, 54 du cadre 10, 50 débouche sur une partie proximale 24, 34 de la face latérale de l'électrode 20, 30 et constitue un orifice d'entrée d'évacuation du fluide du canal 80, 81.

### Membrane

La première électrode 20 et la deuxième électrode 30 sont séparées entre elles par une membrane 40, la première électrode 20 faisant face à la membrane 40 par sa face inférieure et la deuxième électrode 30 faisant face à la membrane 40 par sa face supérieure.

Le contact de l'électrode 20, 30 avec la membrane 40 peut être direct ou indirect. Ainsi, selon un mode de réalisation, l'électrode 20, 30 est en contact avec la membrane 40 sans élément intermédiaire. Selon un autre mode de réalisation, l'électrode 20, 30 est en contact indirect avec la membrane 40, séparé par un élément intermédiaire, par exemple un film périphérique disposé sur les faces de la membrane 40.

Typiquement, la première électrode 20 est en contact direct avec la membrane 40 et la deuxième électrode 30 est en contact direct avec la membrane 40. Ainsi, typiquement la membrane 40 présente une surface supérieure 43 et une surface inférieure 41, la surface supérieure 43 étant en contact avec la première électrode 20 et la surface inférieure 41 étant en contact avec la deuxième électrode 30.

Par exemple la membrane 40 est une membrane perméable d'échange d'ions. Par exemple, la membrane 40 est une membrane d'échange d'ions (ou membrane échangeuse d'ions) comprenant un polymère organique, et de préférence un polymère organique halogéné, et encore de préférence un polymère fluoré. De tels polymères préférés sont connus et disponibles sur le marché comme par exemple le Nafion®.

Selon un mode de réalisation, la première électrode 20, la deuxième électrode 30 et la membrane 40 sont maintenues en contact par pression. Le contact par pression est un contact sur au moins une partie des électrodes 20, 30.

Avantageusement, la membrane 40 présente une aire supérieure à l'aire de la première électrode 20 et de la deuxième électrode 30, avec l'aire de la membrane 40 ne tenant pas compte de la porosité de la membrane 40.

Selon un mode de réalisation, la membrane 40 est disposée en contact avec le cadre 10, 50. La membrane 40 est avantageusement emprisonnée entre les deux cadres 10, 50.

Au moins une des faces 43, 41 de la membrane 40 forme une paroi du canal d'entrée 60, 61 ou du canal de sortie 80, 81.

Par exemple, sur les figures 1 et 3, la surface supérieure 43 de la membrane 40 forme une partie de la paroi inférieure du canal d'entrée 60 et du canal de sortie 80 de la première électrode 20. La surface inférieure 41 de la membrane 40 forme une partie de la paroi supérieure du canal d'entrée 61 et du canal de sortie 81 de la deuxième électrode 30.

Le ou les canaux d'entrée 60, 61 ou de sortie 80, 81 débouchant sur la membrane 40 au niveau de la surface supérieure 43, respectivement inférieure 41, ne se trouvent pas en regard d'un canal 60, 61, 80, 81 débouchant sur la membrane 40 au niveau de la face inférieure 41, respectivement supérieure 43. Ainsi, deux canaux 60 et 61 ou 80 et 81 ne se trouvent pas en regard l'un de l'autre de part et d'autre de la membrane 40. La membrane 40 est toujours en contact au niveau d'au moins une de ses faces 41, 43 avec de la matière, typiquement avec un cadre 10, 50. La membrane 40 est donc supportée sur toute sa surface.

Le fluide électrochimique est donc envoyé dans le cadre 10, 50 par la partie distale 12, 52, puis traverse le cadre 10, 50 dans la partie proximale 14, 54 pour alimenter l'électrode 20, 30. Selon une variante, le fluide électrochimique circulant dans la partie proximale 14, 54 est au moins en partie ou entièrement au contact avec les deux cadres 10, 50. Selon une variante, le fluide électrochimique circulant dans la partie distale 12, 52 est au moins en partie ou entièrement en contact avec le cadre et le cadre intercalaire 500.

### Cadres intercalaires

L'empilement 100 comporte un cadre intercalaire 500 disposé en périphérie d'une plaque intercalaire 76 et logeant ladite plaque intercalaire 76. Le cadre inférieur 50 de la première cellule électrochimique 1 et le cadre supérieur 10 de la deuxième cellule électrochimique 101 sont séparés au moins en partie par le cadre intercalaire 500.

Le cadre inférieur 50 de la première cellule électrochimique 1 fait face au cadre intercalaire 500 par sa face inférieure et le cadre supérieur 10 de la deuxième cellule électrochimique 101 fait face au cadre intercalaire 500 par sa face supérieure.

Le cadre intercalaire 500 comprend une face supérieure 503 et une face inférieure 501. Au moins une des faces 503, 501 du cadre intercalaire 500 forme une paroi du canal d'entrée 60, 61 ou du canal de sortie 80, 81.

Sur la figure 1, la face inférieure 501 du cadre intercalaire 500 forme la paroi supérieure du canal d'entrée 60 et du canal de sortie 80 du cadre supérieur 10 de la deuxième cellule électrochimique 101. La face supérieure 503 du cadre intercalaire 500 forme la paroi inférieure du canal d'entrée 61 et du canal de sortie 81 du cadre inférieur 50.

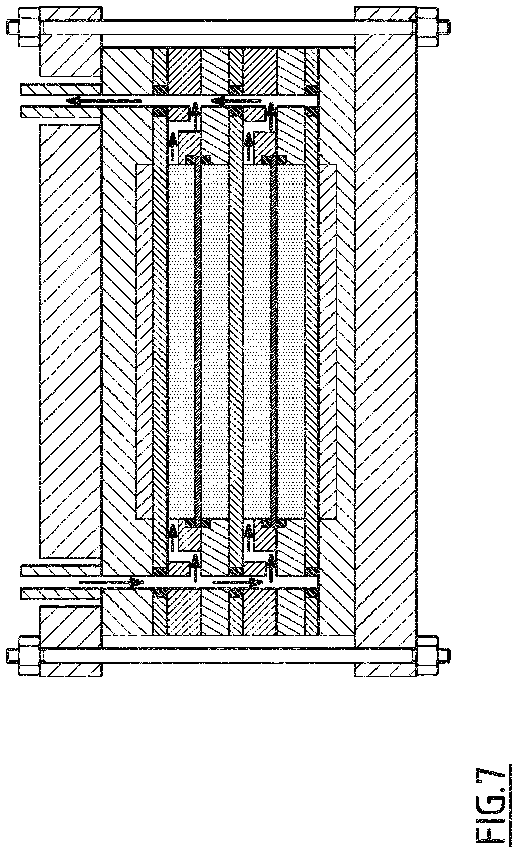

Selon l'état de la technique, comme visible sur la figure 7, la plaque intercalaire filmée forme une paroi du canal d'entrée ou du canal de sortie. Une dégradation et/ou un décollement du film plastique entraine alors la mise en contact du fluide électrochimique avec la plaque intercalaire et donc sa corrosion. De plus, du fait de l'impossibilité de protéger la tranche de la plaque, il est nécessaire d'alimenter l'électrode dans sa partie proximale.

En général, le cadre intercalaire 500 est en polymère thermoplastique, comme par exemple en polypropylène (PP). De préférence, le cadre intercalaire 500 est réalisé dans la même matière que le cadre supérieur 10 et/ou le cadre inférieur 50. Le cadre intercalaire 500 est généralement obtenu par découpe au jet d'eau ou au laser d'une plaque d'épaisseur E. En variante, le cadre intercalaire 500 est moulé.

Le cadre intercalaire 500 est de préférence réalisé en matière dépourvue de pigment, avantageusement en matière transparente aux rayonnements laser.

Le cadre intercalaire 500 présente une épaisseur E sensiblement égale à l'épaisseur E' de la plaque intercalaire 76. Les épaisseurs E, E' sont mesurées selon une direction parallèle à la direction d'empilement D. Par exemple, l'épaisseur E du cadre intercalaire est comprise entre 0,5 mm et 2,0 mm. Il est facile d'adapter l'épaisseur E du cadre intercalaire 500 en fonction de l'épaisseur E' de la plaque intercalaire 76.

Le cadre intercalaire 500 est positionné par rapport aux cadres supérieur 10 et inférieur 50 au moyen de piges positionnées dans les coins.

Selon une variante avantageuse, le cadre intercalaire 500 est maintenu solidairement en contact avec le cadre inférieur 50 de la première cellule électrochimique 1 et le cadre supérieur 10 de la deuxième cellule électrochimique 101 par soudure plastique, typiquement par soudure au laser. L'absorption du rayonnement laser est facilitée lorsque le cadre intercalaire 500 est en matière transparente et le cadre 10, 50 en matière colorée, typiquement noire. La soudure permet de supprimer des joints et fiabiliser l'étanchéité.

### Plaques intercalaires

La plaque intercalaire 76 est disposée entre la première cellule électrochimique 1 et la deuxième cellule électrochimique 101.

La plaque intercalaire 76 présente une face supérieure 376 et une face inférieure 176.

La surface inférieure 31 de la deuxième électrode 30 d'une première cellule électrochimique 1 est en contact avec la surface supérieure 376 de la plaque intercalaire 76, formant électrode réactive (où a lieu la réaction électrochimique).

La surface supérieure 123 de la première électrode 120 de la deuxième cellule électrochimique 101 est en contact avec la surface inférieure 176 de la plaque intercalaire 76.

De préférence, la plaque intercalaire 76 présente une largeur et/ou une longueur supérieure ou égale à la largeur et/ou la longueur de l'électrode 20, 30. Selon une variante, la plaque intercalaire 76 présente une surface sensiblement supérieure ou égale à la surface de l'électrode 20, 30.

Selon un mode de réalisation avantageux, la plaque intercalaire 76 présente une surface d'aire comprise entre 110% et 130% de l'aire de l'électrode 20, 30. La plaque intercalaire 76 dépasse très peu au-delà de l'électrode 20, 30 et est ainsi presque limitée à la zone réactive. Selon un mode de réalisation, la surface de contact entre la plaque intercalaire 76 et les cadres inférieur 50 et supérieur 10 est juste suffisante pour maintenir la plaque intercalaire 76 solidairement entre les deux cadres inférieur 50 et supérieur 10 et assurer l'étanchéité au fluide électrochimique contenu de chaque électrode 30, 120 en contact avec la plaque intercalaire 76.

Typiquement, la plaque intercalaire 76 est en partie en contact avec le cadre supérieur 10 de la deuxième cellule électrochimique 101 par sa face inférieure 176 et avec le cadre inférieure 50 de la première cellule électrochimique 1 par sa face supérieure 376. La plaque intercalaire 76 est positionnée bord à bord dans le logement du cadre intercalaire 500. Avantageusement, la plaque intercalaire 76 est positionnée de sorte qu'il existe un dégagement suffisant, par exemple allant de 1 mm à 4 mm, entre les bords extérieurs de la plaque intercalaire 76 et les bords du logement du cadre intercalaire 500, pour que la plaque intercalaire 76 ne chevauche pas le cadre intermédiaire 500.

Typiquement, la plaque intercalaire 76 est constituée de ou comprend un élément conducteur, comme par exemple un élément métallique, typiquement du cuivre, éventuellement sous forme alliée et/ou pourvue d'un revêtement, et/ou un graphite ou un matériau composite comprenant du graphite. Avantageusement, la plaque intercalaire 76 est réalisée en un composite graphite.

La plaque intercalaire 76 est avantageusement une plaque collectrice bipolaire.

Avantageusement, la plaque intercalaire 76 est dépourvue de film plastique.

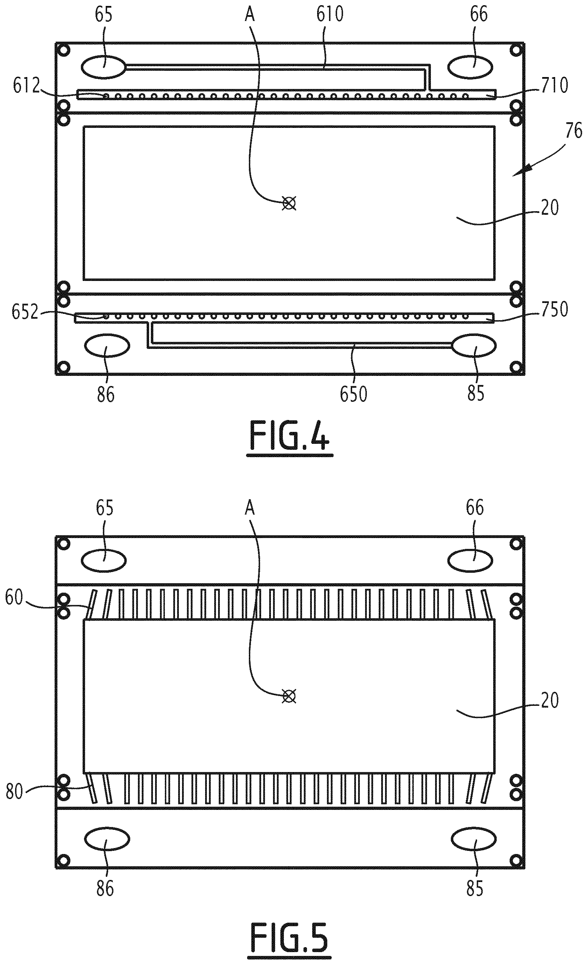

En référence notamment aux figures 4 et 5, le canal d'alimentation 65, 66 et/ou le canal d'évacuation 85, 86 comprennent un canal de shunt d'entrée 610, respectivement de sortie 650, qui forme une déviation dans la partie distale 12, 52 des cadres 10, 50 permettant de déporter l'orifice d'entrée et/ou de sortie, respectivement, de préférence vers l'autre extrémité de la face latérale des électrodes 20, 30 et de déboucher dans la partie proximale 14, 54 des cadres 10,50 sur une chambre d'alimentation 710, respectivement d'évacuation 750.

La chambre d'alimentation 710, respectivement d'évacuation 750 comporte une multitude de canaux d'entrée et/ou de sortie au niveau d'orifices 612, 652 respectifs, de manière à répartir de la manière la plus homogène le fluide alimentant la face latérale des électrodes 20, 30, dans leur partie proximale 24, 34. De telles alimentations présentent avantageusement une forme dite en râteau.

La longueur et la section du canal de shunt 610, 650dépend de la conductivité des fluides électrochimiques et de l'empilement 100 de cellules 1, 101 (donc de la tension du stack). Plus l'empilement 100 est important, plus les courants de shunt sont forts, donc plus la résistance électrique entre cellules 1, 101 doit être augmentée. C'est-à-dire plus le canal de shunt 610, 650 doit être long et/ou plus la section du canal 610, 650 doit être petite. La contrepartie est une augmentation de la perte de charge du stack. Il y a donc un compromis à trouver entre minimiser les courants de shunt et minimiser la consommation des pompes. Il y a également un compromis à trouver sur le nombre maximal de cellules 1, 101 à empiler.

Il est préféré que la longueur du canal dans la partie distale 12, 52 soit la plus longue possible, car elle participe directement à augmenter la résistance électrique entre cellule donc augmente le shunt et celle dans la partie proximale 14, 54 la plus courte possible car elle participe peu au shunt du fait de la faible largeur cumulée des canaux. Typiquement, le canal de shunt 610, 650 mesure entre 100 et 500 mm.

Avantageusement, le canal de shunt 610, 650 présente une section transversale réduite, typiquement comprise entre 5 mm² et 15 mm².

Selon un mode de réalisation avantageux représenté sur la figure 4, l'ensemble formé par le premier canal d'alimentation 65, le canal de shunt d'entrée 610 et la première chambre d'alimentation 710 est disposé de manière opposée à l'ensemble formé par le premier canal d'évacuation 85, le canal de shunt de sortie 650 et la première chambre d'évacuation 750 par rapport à l'axe central A de l'empilement 100, c'est-à-dire qu'il est sensiblement l'image de l'ensemble formé par le premier canal d'évacuation 85 et le canal de shunt de sortie 620 par rotation d'un angle de 180° autour de l'axe central A.

De même, de préférence, l'ensemble formé par le deuxième canal d'alimentation 66 et le canal de shunt d'entrée correspondant (non représenté) est disposé de manière opposée à l'ensemble formé par le deuxième canal d'évacuation 86 et le canal de shunt de sortie correspondant (non représenté) par rapport à l'axe central A de l'empilement 100, c'est-à-dire qu'il est sensiblement l'image de l'ensemble formé par le deuxième canal d'évacuation 86 et le canal de shunt de sortie correspondant par rotation d'un angle de 180° autour de l'axe central A.

Grâce à cette configuration, le fluide électrochimique parcourt sensiblement la même distance entre l'orifice d'entrée 64, 67 et l'orifice de sortie 84, 87 quel que soit le canal d'entrée emprunté.

Au moins une des faces 501, 503 du cadre intercalaire 500 forme une paroi du canal de shunt 610, 650.

Avantageusement, l'empilement des cadres 10, 50, 500 forme un canal.

De manière préférée, l'empilement des cellules électrochimiques 1, 101, et en particulier l'empilement des premiers trous d'alimentation 16, 56 et des deuxièmes trous d'évacuation 17, 57 forme respectivement un premier canal d'alimentation 65 d'un premier fluide électrochimique et un premier canal d'évacuation 85 d'un premier fluide électrochimique, ledit premier fluide électrochimique étant contenu dans la première électrode 20. De manière préférée, l'empilement 100 des cellules électrochimiques 1, 101, et en particulier l'empilement des troisièmes trous d'alimentation 18, 58 et des quatrièmes trous d'évacuation 19, 59 forme respectivement un deuxième canal d'alimentation 66 d'un deuxième fluide électrochimique et un deuxième canal d'évacuation 86 d'un deuxième fluide électrochimique, ledit deuxième fluide électrochimique étant contenu dans la deuxième électrode 30.

Les canaux d'alimentation 65, 66 et les canaux d'évacuation 85, 86 peuvent être chacun indépendamment en communication fluidique avec des réservoirs de stockage ou de recharge respectivement d'un premier fluide électrochimie contenant par exemple un ou plusieurs électrolytes et d'un deuxième fluide électrochimie contenant par exemple un ou plusieurs électrolytes, les premiers et deuxièmes fluides électrochimiques pouvant contenir des espèces chimiques, et en particulier des électrolytes, identiques ou différentes.

### Extrémités

Selon un mode de réalisation, la surface supérieure 23 de la première électrode 20 d'une première cellule électrochimique 1 est en contact avec la surface inférieure 175 d'une plaque intercalaire supérieure 75, formant électrode réactive (où a lieu la réaction électrochimique).

La surface supérieure 375 de la plaque intercalaire supérieure 75 est en contact avec la surface inférieure 171 d'une plaque collectrice supérieure 70 de courant électrique.

La surface inférieure 131 de la deuxième électrode 130 d'une deuxième cellule électrochimique 101 est en contact avec la surface supérieure 378 d'une plaque intercalaire inférieure 78, formant électrode réactive (où a lieu la réaction électrochimique).

La surface inférieure 178 de la plaque inférieure 78 est en contact avec la surface supérieure 363 d'une plaque collectrice inférieure 71 de courant électrique.

Typiquement, les plaques collectrices 70, 71 de courant sont constituées de ou comprennent un élément conducteur, comme par exemple un élément métallique, éventuellement sous forme alliée, et/ou un graphite ou un matériau composite comprenant du graphite. En général, il s'agit d'un élément bon conducteur, typiquement du cuivre.

L'empilement 100 comporte avantageusement également un cadre d'alimentation 510 et un cadre de fermeture 550.

Selon un mode de réalisation, le cadre d'alimentation 510 présente une épaisseur sensiblement égale à la somme de l'épaisseur de la plaque intercalaire supérieure 75 et de l'épaisseur de la plaque collectrice supérieure 70 les épaisseurs étant mesurées selon une direction parallèle à la direction d'empilement D.

Selon un mode de réalisation, le cadre d'alimentation 510 présente une première ouverture d'alimentation 565, respectivement d'évacuation 585, débouchant sur le premier canal d'alimentation 65, respectivement d'évacuation 85, et une deuxième ouverture d'alimentation, respectivement d'évacuation (non représentés) débouchant sur le deuxième canal d'alimentation 66, respectivement d'évacuation 86.

Selon un mode de réalisation, le cadre de fermeture 550 présente une épaisseur sensiblement égale à la somme de l'épaisseur de la plaque intercalaire inférieure et de l'épaisseur de la plaque collectrice inférieure 71, les épaisseurs étant mesurées selon une direction parallèle à la direction d'empilement D.

Selon un mode de réalisation, le cadre de fermeture 550 est dépourvu d'orifice débouchant sur le canal d'alimentation 65, 66 ou le canal d'évacuation 85, 86. Ainsi, le cadre de fermeture 550 referme les canaux fluidiques 65, 66, 85, 86 du stack.

### Agencement des joints

L'agencement des joints d'étanchéité de l'empilement 100 va à présent être décrit.

L'étanchéité de l'empilement 100 est assurée par des joints dont les gorges sont façonnées dans les cadres ou par une soudure plastique - plastique.

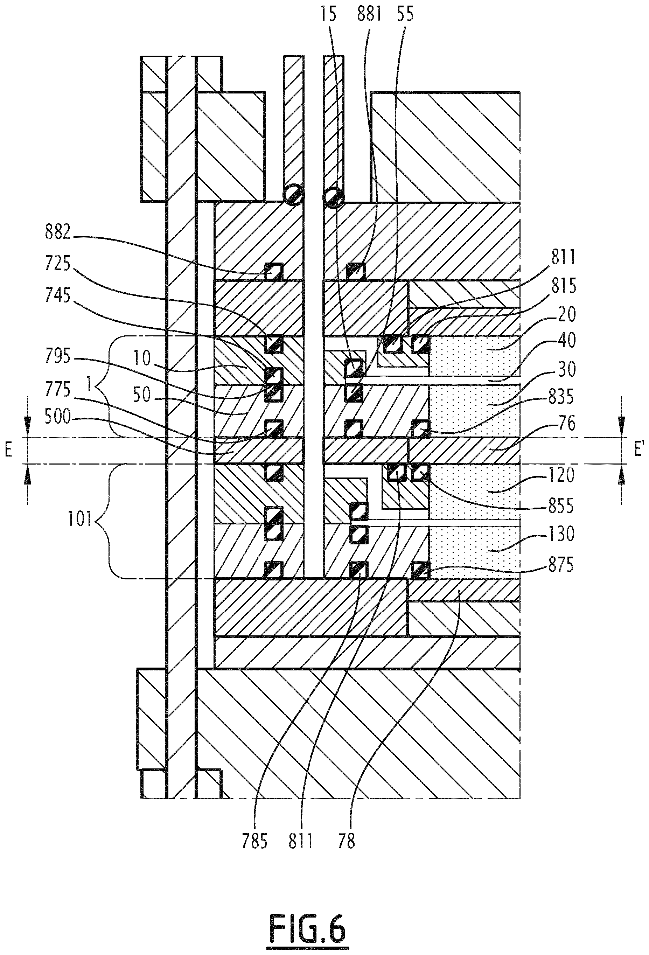

Les figures 1 et 6 représentent à titre illustratif un agencement particulier des joints d'étanchéité.

Avantageusement, le cadre supérieur 10 comprend un logement d'un joint d'étanchéité 15 et le cadre inférieur 50 comprend un logement d'un joint d'étanchéité 55, les joints d'étanchéité 15, 55 étant en contact avec la membrane 40.

Le joint d'étanchéité 15,55 permet d'éviter une fuite de fluide électrochimique provenant du cadre supérieur 10, et plus précisément du canal d'entrée 60 ou de sortie 80, vers la deuxième électrode 30, ou inversement, du cadre inférieur 50, et plus précisément du canal d'entrée 61 ou de sortie 81, vers la première électrode 20, sans traverser la membrane 40. Ainsi, le joint d'étanchéité 15,55 évite le contournement fluidique de la membrane 40.

Le logement de joint d'étanchéité 15,55 forme avantageusement une gorge de réception du joint 15,55 d'étanchéité.

Selon une variante, le logement forme un évidement réalisé dans le cadre 10,50 apte à recevoir un joint d'étanchéité 15,55 de forme annulaire.

Le cadre 10,50 peut comprendre plusieurs logements de joints 15,55.

Le joint 15,55 d'étanchéité assure l'étanchéité interne entre la membrane 40 et le cadre 10,50 respectivement afin d'éviter un écoulement fluide, du type fluide électrochimique, hors de la zone de contact de la membrane 40 avec les électrodes 20,30.

La membrane 40 est avantageusement emprisonnée entre les deux cadres 10, 50, et en particulier en contact au moins en un point avec le joint d'étanchéité 15, 55.

Avantageusement, la membrane 40 présente une périphérie sensiblement identique ou similaire à la périphérie du ou des joints 15, 55 d'étanchéité de la membrane 40. La périphérie de la membrane 40 peut être en contact avec le ou les joints d'étanchéité interne 15, 55 de la membrane 40. Ainsi, la membrane 40 peut présenter une dimension réduite ce qui optimise la surface active de la membrane 40 par rapport à sa surface totale et diminue les coûts de production. Par exemple, la pression de maintien des cadres 10, 50 en contact avec la membrane 40 permet de « pincer » la périphérie de la membrane 40 entre les joints d'étanchéité interne 15, 55.

Le cadre 10,50 comprend avantageusement un ou plusieurs joints d'étanchéité 725, 775 disposés dans des gorges de joints, assurant l'étanchéité externe de la circulation du fluide dans le canal d'alimentation 65, 66 et/ou le canal d'évacuation 85, 86 au niveau de la partie distale 12,52 du cadre 10,50.

Le cadre 10,50 comprend avantageusement un ou plusieurs joints d'étanchéité 745, 795 disposés dans des gorges de joints, assurant l'étanchéité externe de la circulation du fluide dans le canal d'alimentation 65, 66 et/ou le canal d'évacuation 85, 86 au niveau de la partie proximale 14,54 du cadre 10,50.

Les joints 15, 55 assurant l'étanchéité interne évitent tout contact entre la zone anodique et la zone cathodique. Les joints 725, 745, 775, 795 assurant l'étanchéité externe évitent tout contact avec l'atmosphère ambiante et les fuites des fluides électrochimiques vers l'extérieur de la cellule 1, 101.

Avantageusement, le cadre supérieur 10 comporte également un joint 811 disposé dans une gorge d'étanchéité et assurant l'étanchéité de la circulation du fluide dans le canal d'entrée 60, respectivement de sortie 80, dans la partie distale 12 du cadre supérieur 10, plus précisément au niveau de la surface de contact entre le cadre intercalaire 500 ou d'alimentation 510 et le cadre supérieur 10.

Avantageusement, le cadre inférieur 50 comporte un joint d'étanchéité 785 disposé dans une gorge d'étanchéité et assurant l'étanchéité de la circulation du fluide dans le canal d'alimentation 65 et/ou le canal d'évacuation 85 au niveau de la partie distale 52 du cadre 50.

Le cadre 10, 50 comprend avantageusement un ou plusieurs joints d'étanchéité 815, 835, 855, 875 assurant l'étanchéité au niveau de la surface de contact entre le cadre supérieur 10 et/ou le cadre inférieur 50 et la plaque intercalaire 75, 76, 78.

Selon un mode de réalisation particulier, le joint d'étanchéité 815 assure l'étanchéité au niveau de la surface de contact entre le cadre supérieur 10 de la première cellule électrochimique 1 et la plaque intercalaire supérieure 75.

Selon un mode de réalisation particulier, le joint d'étanchéité 835 assure l'étanchéité au niveau de la surface de contact entre le cadre inférieur 50 de la première cellule électrochimique 1 et la plaque intercalaire 76.

Selon un mode de réalisation particulier, le joint d'étanchéité 855 assure l'étanchéité au niveau de la surface de contact entre le cadre supérieur 10 de la deuxième cellule électrochimique 101 et la plaque intercalaire 76.

Selon un mode de réalisation particulier, le joint d'étanchéité 875 assure l'étanchéité au niveau de la surface de contact entre e cadre inférieur 50 de la deuxième cellule électrochimique 101 et la plaque intercalaire inférieure 78.

Les joints 815, 835, 855, 875 sont par exemple disposés dans des gorges de joint des cadres supérieur 10 et inférieur 50.

Eventuellement, un joint peut être ajouté entre le canal de shunt et la chambre pour éviter que le fluide ne court-circuite le canal de shunt.

Un autre agencement des joints d'étanchéité peut aussi être envisagé.

### Batterie

L'invention concerne également une batterie rédox en flux 2 comportant un tel empilement 100.

Avantageusement, la batterie selon l'invention comprend une plaque d'alimentation 180 et une plaque de fermeture 160 disposées de part et d'autres de l'empilement 100.

Typiquement, la plaque d'alimentation 180 est en contact par sa surface inférieure 181 en partie avec la surface supérieure 173 de la plaque collectrice supérieure 70 et en partie avec la surface supérieure du cadre d'alimentation 510. La plaque d'alimentation 180 est en contact par sa surface supérieure 183 avec la surface inférieure 111 d'une bride 110.

Typiquement, la plaque de fermeture 160 est en contact par sa surface supérieure 163 en partie avec la surface inférieure 361 de la plaque collectrice inférieure 71 et en partie avec la surface inférieure du cadre de fermeture 550. La plaque de fermeture 160 est en contact par sa surface inférieure 161 avec la surface supérieure 113 d'une bride 210.

La plaque d'alimentation 180 permet notamment d'amener les fluides au stack, et d'isoler électriquement la plaque collectrice supérieure 70 des brides de serrage 110 serrées avec des écrous 200, de préférence des écrous 200 en métal. La plaque de fermeture 160 a les mêmes fonctions en isolant la plaque collectrice inférieure 71 des brides de serrage 210.

Par exemple, le maintien en contact des première 20 et deuxième 30 électrodes est assuré par une bride 110 de serrage du cadre.

Typiquement, une bride 110 de serrage maintient un empilement de cellules électrochimiques et de plaques collectrices de courant en compression.

Selon un mode de réalisation particulier, la plaque d'alimentation 180 comprend avantageusement un ou plusieurs joints d'étanchéité 881, 882 disposés dans des gorges de joint et assurant l'étanchéité externe de la circulation du fluide dans le canal d'alimentation 65, 66 et/ou le canal d'évacuation 85, 86 au niveau de la surface de contact entre la plaque d'alimentation 180 et le cadre d'alimentation 510.

## Revendications

1. Empilement (100) de plusieurs cellules électrochimiques (1, 101), les cellules électrochimiques (1, 101) étant empilées les unes sur les autres selon une direction d'empilement (D), l'empilement (100) comprenant au moins :
- une première cellule électrochimique (1),
- une deuxième cellule électrochimique (101), et
- une plaque intercalaire (76),
chaque cellule (1, 101) comportant un cadre supérieur (10) logeant une première électrode (20, 120) et un cadre inférieur (50) logeant une deuxième électrode (30, 130), la première électrode (20, 120) et la deuxième électrode (30, 130) étant séparées entre elles par une membrane (40), la première électrode (20, 120) étant en contact avec la membrane (40) par sa face inférieure (21, 121) et la deuxième électrode (30, 130) étant en contact avec la membrane (40) par sa face supérieure (33, 133), la deuxième électrode (30) de la première cellule électrochimique (1) et la première électrode (120) de la deuxième cellule électrochimique (101) étant séparées par la plaque intercalaire (76),
**caractérisé en ce que** l'empilement (100) comporte un cadre intercalaire (500) disposé en périphérie de la plaque intercalaire (76), le cadre inférieur (50) de la première cellule électrochimique (1) et le cadre supérieur (10) de la deuxième cellule électrochimique (101) étant séparés au moins en partie par le cadre intercalaire (500), le cadre inférieur (50) de la première cellule électrochimique (1) faisant face au cadre intercalaire (500) par sa face inférieure et le cadre supérieur (10) de la deuxième cellule électrochimique (101) faisant face au cadre intercalaire (500) par sa face supérieure, et
**en ce que** le cadre supérieur (10) et le cadre inférieur (50) de chaque cellule électrochimique (1, 101) sont séparés entre eux par la membrane (40),
chaque cadre supérieur (10) ou inférieur (50) comprenant une partie proximale (14, 54) proche de la membrane (40) et une partie distale (12, 52) distante de la membrane (40),
chaque cadre supérieur (10) ou inférieur (50) comprenant un canal alimentation (65, 66) d'un fluide électrochimique et un canal d'entrée (60, 61) d'un fluide alimentant une face latérale de l'électrode (20, 30), le canal d'entrée (60, 61) comprenant un orifice de sortie (62, 63) dans la partie proximale (14, 54) débouchant sur une face latérale de l'électrode (20, 30),
chaque cadre supérieur (10) ou inférieur (50) comprenant un canal d'évacuation (85, 86) d'un fluide électrochimique et un canal de sortie (80, 81) du fluide par une face latérale de l'électrode (20, 30), le canal de sortie (80, 81) comprenant un orifice d'entrée (82, 83) dans la partie proximale (14, 54) débouchant sur une face latérale de l'électrode (20, 30),
au moins un, et de préférence l'ensemble, parmi le canal d'entrée (60, 61) et le canal de sortie (80, 81) comprenant un orifice d'entrée (64, 67), respectivement de sortie (84, 87), débouchant sur le canal d'alimentation (65, 66), respectivement d'évacuation (85, 86), dans la partie distale (12, 52) du cadre supérieur (10) ou inférieur (50).

2. Empilement (100) selon la revendication 1, dans lequel au moins un, et de préférence l'ensemble, parmi l'orifice (62, 63) de sortie du canal d'alimentation (60, 61) et l'orifice (82, 83) d'entrée du canal d'évacuation (80, 81) d'au moins un cadre supérieur (10) ou inférieur (50), débouche sur la membrane (40).

3. Empilement (100) selon la revendication 2, dans lequel la membrane (40) comprend une face supérieure (43) et une face inférieure (41), le ou les orifices d'entrée (82, 83) ou de sortie (62, 63) débouchant sur la membrane (40) au niveau de la face supérieure (43), respectivement inférieure (41), ne se trouvant pas en regard d'un orifice (62, 63, 82, 83) débouchant sur la membrane (40) au niveau de la face inférieure (41), respectivement supérieure (43).

4. Empilement (100) selon l'une quelconque des revendications 1 à 3, dans lequel le cadre intercalaire (500) comprend une face supérieure (503) et une face inférieure (501), au moins une desdites faces (501, 503) formant une paroi du canal d'entrée (60, 61) ou du canal de sortie (80, 81).

5. Empilement (100) selon l'une quelconque des revendications 1 à 4, dans lequel le cadre intercalaire (500) présente une épaisseur (E) supérieure ou égale, de préférence égale, à l'épaisseur (E') de la plaque intercalaire (76), lesdites épaisseurs (E, E') étant mesurées selon une direction parallèle à la direction d'empilement (D).

6. Empilement (100) selon l'une quelconque des revendications 1 à 5, dans lequel chaque cadre (10, 50) supérieur ou inférieur comporte un logement d'un joint d'étanchéité (15, 55), les joints d'étanchéité (15, 55) étant en contact avec la membrane (40).

7. Empilement (100) selon l'une quelconque des revendications 1 à 6, comportant en outre une plaque collectrice supérieure (70) de courant, une plaque collectrice inférieure (71) de courant, une plaque intercalaire supérieure (75) et une plaque intercalaire inférieure (78), les plaques collectrices (70, 71) étant chacune en contact avec une plaque intercalaire supérieure (180), respectivement inférieure (160), disposée entre ladite plaque collectrice (70, 71) et une électrode (20, 30), l'empilement (100) comportant un cadre d'alimentation (510) et un cadre de fermeture (550) disposés en périphérie respectivement de l'ensemble formé par la plaque collectrice supérieure (70) et la plaque intercalaire supérieure (75) et de l'ensemble formé par la plaque collectrice inférieure (71) et la plaque intercalaire inférieure (78).

8. Empilement (100) selon la revendication 7, dans lequel le cadre de fermeture (550) est dépourvu d'orifice débouchant sur le canal d'alimentation (65, 66) ou le canal d'évacuation (85, 86).

9. Batterie rédox en flux (2) comportant un empilement (100) selon l'une quelconque des revendications 1 à 8.

10. Méthode de production d'électricité comprenant la mise en oeuvre d'un empilement (100) tel que défini selon l'une quelconque des revendications 1 à 8 ou d'une batterie (2) selon la revendication 9.

## Patentansprüche

1. Stapel (100) mit mehreren elektrochemischen Zellen (1, 101), wobei die elektrochemischen Zellen (1, 101) übereinander entlang einer Stapelrichtung (D) gestapelt sind, wobei der Stapel (100) zumindest aufweist:
- eine erste elektrochemische Zelle (1),
- eine zweite elektrochemische Zelle (101) und
- eine Zwischenplatte (76),
wobei jede Zelle (1, 101) aufweist einen oberen Rahmen (10), welcher eine erste Elektrode (20, 120) unterbringt, und einen unteren Rahmen (50), welcher eine zweite Elektrode (30, 130) unterbringt, wobei die erste Elektrode (20, 120) und die zweite Elektrode (30, 130) zwischen einander mittels einer Membran (40) getrennt sind, wobei die erste Elektrode (20, 120) in Kontakt mit der Membran (40) mittels ihrer unteren Fläche (21, 121) ist, und wobei die zweite Elektrode (30, 130) in Kontakt mit der Membran (40) mittels ihrer oberen Fläche (33, 133) ist, wobei die zweite Elektrode (30) der ersten elektrochemischen Zelle (1) und die erste Elektrode (120) der zweiten elektrochemischen Zelle (101) mittels der Zwischenplatte (76) getrennt sind,
**dadurch gekennzeichnet, dass** der Stapel (100) einen Zwischenrahmen (500) aufweist, welcher am Umfang der Zwischenplatte (76) angeordnet ist, wobei der untere Rahmen (50) der ersten elektrochemischen Zelle (1) und der obere Rahmen (10) der zweiten elektrochemischen Zelle (101) zumindest teilweise mittels des Zwischenrahmens (500) getrennt sind, wobei der untere Rahmen (50) der ersten elektrochemischen Zelle (1) dem Zwischenrahmen (500) mittels seiner unteren Fläche zugewandt ist und der obere Rahmen (10) der zweiten elektrochemischen Zelle (101) dem Zwischenrahmen (500) mittels seiner oberen Fläche zugewandt ist, und
dadurch, dass der obere Rahmen (10) und der untere Rahmen (50) jeder elektrochemischen Zelle (1, 101) zwischen einander mittels der Membran (40) getrennt sind,
wobei jeder obere (10) oder untere (50) Rahmen einen Proximalabschnitt (14, 54) nahe der Membran (40) und einen Distalabschnitt (12, 52) entfernt von der Membran (40) aufweist,
wobei jeder obere (10) oder untere (50) Rahmen aufweist einen Kanal zur Versorgung (65, 66) mit einem elektrochemischen Fluid und einen Kanal zum Eintritt (60, 61) eines Fluids, welcher eine Seitenfläche der Elektrode (20, 30) versorgt, wobei der Kanal zum Eintritt (60, 61) eine Öffnung zum Austritt (62, 63) im Proximalabschnitt (14, 54) aufweist, welche auf eine Seitenfläche der Elektrode (20, 30) mündet,
wobei jeder obere (10) oder untere (50) Rahmen aufweist einen Kanal zum Abfluss (85, 86) eines elektrochemischen Fluids und einen Kanal zum Austritt (80, 81) des Fluids mittels einer Seitenfläche der Elektrode (20, 30), wobei der Kanal zum Austritt (80, 81) eine Öffnung zum Eintritt (82, 83) im Proximalabschnitt (14, 54) aufweist, welche auf eine Seitenfläche der Elektrode (20, 30) mündet,
wobei zumindest einer, und vorzugsweise die Gesamtheit, von dem Kanal zum Eintritt (60, 61) und dem Kanal zum Austritt (80, 81) eine Öffnung zum Eintritt (64, 67), beziehungsweise zum Austritt (84, 87), welche auf den Kanal zur Versorgung (65, 66), beziehungsweise zum Abfluss (85, 86), mündet, im Distalabschnitt (12, 52) des oberen (10) oder des unteren (50) Rahmens aufweist.

2. Stapel (100) gemäß Anspruch 1, wobei zumindest eine, und vorzugsweise die Gesamtheit, von der Öffnung (62, 63) zum Austritt des Kanals zur Versorgung (60, 61) und die Öffnung (82, 83) zum Eintritt des Kanals zum Abfluss (80, 81) von zumindest einem oberen (10) oder unteren (50) Rahmen auf die Membran (40) mündet.

3. Stapel (100) gemäß Anspruch 2, wobei die Membran (40) eine obere Fläche (43) und eine untere Fläche (41) aufweist, wobei die Öffnung oder die Öffnungen zum Eintritt (82, 83) oder zum Austritt (62, 63), welche auf die Membran (40) auf dem Niveau der oberen (43), beziehungsweise unteren (41), Fläche münden, sich nicht gegenüber von einer Öffnung (62, 63, 82, 83) befinden, welche auf die Membran (40) auf dem Niveau der unteren (41), beziehungsweise oberen (43), Fläche mündet.

4. Stapel (100) gemäß irgendeinem der Ansprüche 1 bis 3, wobei der Zwischenrahmen (500) eine obere Fläche (503) und eine untere Fläche (501) aufweist, wobei zumindest eine der besagten Flächen (501, 503) eine Wand des Kanals zum Eintritt (60, 61) oder des Kanals zum Austritt (80, 81) bildet.

5. Stapel (100) gemäß irgendeinem der Ansprüche 1 bis 4, wobei der Zwischenrahmen (500) eine Dicke (E) hat, welche größer oder gleich, vorzugsweise gleich, der Dicke (E') der Zwischenplatte (76) ist, wobei die besagten Dicken (E, E') entlang einer Richtung gemessen sind, welche parallel zur Stapelrichtung (D) ist.

6. Stapel (100) gemäß irgendeinem der Ansprüche 1 bis 5, wobei jeder obere oder untere Rahmen (10, 50) einen Sitz für eine Dichtung (15, 55) hat, wobei die Dichtungen (15, 55) in Kontakt mit der Membran (40) sind.

7. Stapel (100) gemäß irgendeinem der Ansprüche 1 bis 6, welcher ferner aufweist eine obere Sammelplatte (70) für Strom, eine untere Sammelplatte (71) für Strom, eine obere Zwischenplatte (75) und eine untere Zwischenplatte (78), wobei die Sammelplatten (70, 71) jeweilig in Kontakt sind mit einer oberen (180), beziehungsweise unteren (160), Zwischenplatte, welche zwischen der besagten Sammelplatte (70, 71) und einer Elektrode (20, 30) angeordnet ist, wobei der Stapel (100) einen Versorgungsrahmen (510) und einen Verschlussrahmen (550) aufweist, welche in zugeordneter Weise angeordnet sind am Umfang der Gruppe, welche aus der oberen Sammelplatte (70) und der oberen Zwischenplatte (75) gebildet ist, und der Gruppe, welche aus der unteren Sammelplatte (71) und der unteren Zwischenplatte (78) gebildet ist.

8. Stapel (100) gemäß Anspruch 7, wobei der Verschlussrahmen (550) ohne Öffnung ist, welche auf den Kanal zur Versorgung (65, 66) oder den Kanal zum Abfluss (85, 86) mündet.

9. Redox-Flussbatterie (2), welche einen Stapel (100) gemäß irgendeinem der Ansprüche 1 bis 8 aufweist.

10. Verfahren zur Erzeugung von Elektrizität, welches aufweist das Einsetzen eines Stapels (100) so wie er gemäß irgendeinem der Ansprüche 1 bis 8 definiert ist oder einer Batterie (2) gemäß Anspruch 9.

## Claims

1. A stack (100) of several electrochemical cells (1, 101), the electrochemical cells (1, 101) being stacked on top of one another in a stacking direction (D), the stack (100) comprising at least:
- a first electrochemical cell (1),
- a second electrochemical cell (101), and
- an intercalary plate (76),
each cell (1, 101) including an upper frame (10) housing a first electrode (20, 120) and a lower frame (50) housing a second electrode (30, 130), the first electrode (20, 120) and the second electrode (30, 130) being separated from one another by a membrane (40), the first electrode (20, 120) being in contact with the membrane (40) by its lower face (21, 121) and the second electrode (30, 130) being in contact with the membrane (40) by its upper face (33, 133), the second electrode (30) of the first electrochemical cell (1) and the first electrode (120) of the second electrochemical cell (101) being separated by the intercalary plate (76),
**characterized in that** the stack (100) includes an intercalary frame (500) arranged on the periphery of the intercalary plate (76), the lower frame (50) of the first electrochemical cell (1) and the upper frame (10) of the second electrochemical cell (101) being separated at least in part by the intercalary frame (500), the lower frame (50) of the first electrochemical cell (1) facing the intercalary frame (500) by its lower face and the upper frame (10) of the second electrochemical cell (101) facing the intercalary frame (500) by its upper face, and **in that** the upper frame (10) and the lower frame (50) of each electrochemical cell (1, 101) are separated from one another by the membrane (40),
each upper (10) or lower (50) frame comprising a proximal portion (14, 54) close to the membrane (40) and a distal portion (12, 52) distant from the membrane (40),
each upper (10) or lower (50) frame comprising a supply channel (65, 66) for supplying an electrochemical fluid and an inlet channel (60, 61) for a fluid supplying a lateral face of the electrode (20, 30), the inlet channel (60, 61) comprising an outlet orifice (62, 63) in the proximal portion (14, 54) opening onto a lateral face of the electrode (20, 30),
each upper (10) or lower (50) frame comprising a discharge channel (85, 86) for an electrochemical fluid and an outlet channel (80, 81) for the fluid via a lateral face (20, 30) of the electrode, the outlet channel (80, 81) comprising an inlet orifice (82, 83) in the proximal portion opening onto a lateral face (14, 54) of the electrode (20, 30),
at least one, and preferably all, from among the inlet channel (60, 61) and the outlet channel (80, 81) comprising an inlet (64, 67), respectively outlet (84, 87) orifice, opening onto the supply (65, 66), respectively discharge (85, 86) channel, respectively, in the distal portion (12, 52) of the upper (10) or lower (50) frame.

2. The stack (100) according to claim 1, wherein at least one, and preferably all, from among the outlet orifice (62, 63) of the supply channel (60, 61) and the inlet orifice (82, 83) of the discharge channel (80, 81) of at least one upper (10) or lower (50) frame, opens onto the membrane (40).

3. The stack (100) according to claim 2, wherein the membrane (40) comprises an upper face (43) and a lower face (41), the inlet (82, 83) or outlet (62, 63) orifice(s) emerging on the membrane (40) at the upper (43), respectively lower (41) face, not being located opposite an orifice opening (62, 63, 82, 83) onto the membrane (40) at the lower (41), respectively upper (43) face.

4. The stack (100) according to any one of claims 1 to 3, wherein the intercalary frame (500) comprises an upper face (503) and a lower face (501), at least one of said faces (501, 503) forming a wall of the inlet channel (60, 61) or the outlet channel (80, 81).

5. The stack (100) according to any one of claims 1 to 4, wherein the intercalary frame (500) has a thickness (E) greater than or equal to, preferably equal to, the thickness (E) of the intercalary plate (76), said thicknesses (E, E') being measured in a direction parallel to the direction of the stack (D).

6. The stack (100) according to any one of claims 1 to 5, wherein each upper or lower frame (10, 50) includes a housing for a sealing gasket (15, 55), the sealing gaskets (15, 55) being in contact with the membrane (40).

7. The stack (100) according to any one of claims 1 to 6, further including an upper current collector plate (70), a lower current collector plate (71), an upper intercalary plate (75) and a lower intercalary plate (78), the collector plates (70, 71) each being in contact with an upper (180), respectively lower (160) intercalary plate, arranged between said collector plate (70, 71) and an electrode (20, 30), the stack (100) including a supply frame (510) and a closing frame (550) arranged on the periphery respectively of the assembly formed by the upper collector plate (70) and the upper intercalary plate (75) and the assembly formed by the lower collector plate (71) and the lower intercalary plate (78).

8. The stack (100) according to claim 7, wherein the closing frame (550) has no orifice opening onto the supply channel (65, 66) or the discharge channel (85, 86).

9. A redox-flow battery (2) including a stack (100) according to any one of claims 1 to 8.

10. A method for producing electricity comprising implementing a stack (100) as defined according to any one of claims 1 to 8 or a battery (2) according to claim 9.
